# NEUE EUROPÄISCHE PATENTSCHRIFT

(11) **EP 0 908 087 B2**
(45) Veröffentlichungstag und Bekanntmachung des Hinweises auf die Entscheidung über den Einspruch: **01.06.2005**
(45) Hinweis auf die Patenterteilung: 03.07.2002
(21) Anmeldenummer: 98117586.2
(22) Anmeldetag: 16.09.1998
(51) Int. Cl.: A01D 41/12

(54) **Feuchtemesseinrichtung und Verfahren zur Feuchtemessung in Erntemaschinen**
Method and device for measuring moisture of grain in harvesting machines
Procédé et dispositif de mesure de l'humidité de grain dans des machines de récolte

(30) Priorität: 09.10.1997 DE 19744483
(43) Veröffentlichungstag der Anmeldung: 14.04.1999
(73) Patentinhaber: CLAAS Selbstfahrende Erntemaschinen GmbH, 33428 Harsewinkel (DE)
(72) Erfinder: Behnke, Willi, 33803 Steinhagen (DE); Diekhans, Norbert, Dr., 33335 Gütersloh (DE)

(56) Entgegenhaltungen:
- EP-A- 0 042 245
- EP-A- 0 389 320
- EP-A- 0 501 099
- EP-A- 0 843 959
- WO-A-96/38714
- CA-A- 2 182 989
- DE-A- 19 541 167
- DE-C- 9 133 359
- US-A- 5 092 819
- US-A- 5 106 339
- US-A- 5 343 761
- US-A- 5 616 851

## Beschreibung

Die Erfindung bezieht sich auf eine Feuchtemeßeinrichtung sowie ein Verfahren zur Feuchtemessung des Erntegutes in Erntemaschinen.

Aus dem Stand der Technik ist es bekannt, Feuchtesensoren in Erntemaschinen einzusetzen, um anhand des Feuchtemeßwertes die Messung der Menge des geernteten Getreides zu präzisieren. Beispielhaft sei hier die DE 41 05 857 genannt. In dieser bekannten Ausführung ist eine Feuchtemeßvorrichtung vorgesehen, die kontinuierlich mit einem Bypass-System die Feuchte des geernteten Erntegutes ermittelt. Ein anderes Beispiel zum Stand der Technik ist in der US 5,616,851 offenbart. Der dort gezeigte Feuchtesensor arbeitet diskontinuierlich, indem eine Menge an Meßgut in einer Meßkammer angesammelt, dann die Messung vorgenommen und das Meßgut wieder in den Erntegutstrom zurückgegeben wird, bevor ein neuer Meßzyklus gestartet werden kann. Auch ist versucht worden, kontinuierlich arbeitende Feuchtesensoren direkt im Förderweg des Erntegutes anzuordnen. Beispielsweise wurde ein Feuchtesensor in einer Komtankbefüllschnecke anstelle eines Schneckenganges oder im Korntank angeordnet. Diese Anbringungsorte der Sensoren wurden gewählt, um unabhängig vom Durchsatz an Erntegut zu sein, da Durchsatzschwankungen durchaus Auswirkungen auf die Genauigkeit des ermittelten Feuchtemeßwertes haben. Da der Sensor in der Befüllschnecke jedoch die Gutförderung unterbricht und der Sensor im Korntank immer nur eine Messung pro Korntank erlaubt, konnten sich beide Systeme nicht am Markt durchsetzen.

Aus dem Stand der Technik ist weiter aus der DE 196 48 126 ein Mikrowellensensor bekannt, der als Glattsensor ausgebildet ist und auch dazu in der Lage ist, mit den Mikrowellen die Feuchtigkeit des am Glattsensor vorbeibewegten Erntegutes zu ermitteln. Der offenbarte Mikrowellensensor ist relativ teuer und verursacht zudem einen hohen Bauaufwand, da die Umgebung vor den Mikrowellen abgeschirmt werden muß.

Alle aus dem Stand der Technik bekannten Feuchtesensoren müssen kalibriert werden, um möglichst genaue Feuchtewerte zu erhalten. Dabei ist zwischen einer meßgutsbedingten Kalibrierung, die abhängig ist von der Art des Erntegutes, und der verarbeitungsbedingten Kalibrierung, die beispielsweise von der Meßgutdichte, Fördermenge und Förderorganen bestimmt wird. Für die meßgutbedingte Kalibrierung werden Kalibrierkurven bereitgestellt, die vom Benutzer der Feuchtemeßeinrichtung abgerufen werden können. Diese Kurven sind jeweils für bestimmte Gutttemperaturen gültig. Die Notwendigkeit der verarbeitungsbedingten Kalibrierung wird in der Praxis jedoch umgangen, indem Meßstellen mit zumindest zeitweise konstanten Meßbedingungen eingerichtet werden. Da diese Meßstellen nicht immer konstante Meßbedingungen gewährleisten, ergeben sich hier Fehler, diesich zusätzlich verstärken, wenn weitere verarbeitungsbedingte Fehlerquellen von Messungen, wie beispielsweise die Verschmutzung des Sensors, unberücksichtigt bleiben. Unter solchen Bedingungen hängt die Genauigkeit des Feuchtewertes von der Sorgfalt und dem Verständnis des Bedieners der Erntemaschine für die Belange der Feuchtemeßvorrichtung ab, was jedoch nicht immer vorausgesetzt werden kann.

Es ist die Aufgabe der vorliegenden Erfindung, eine verbesserte Feuchtemeßeinrichtung vorzuschlagen, die die genannten Nachteile der aus dem Stand der Technik bekannten Feuchtemeßeinrichtungen zumindest verringerte.

Die Aufgabe wird durch die Merkmale der Ansprüche 1 und 9 gelöst.

Die Kombination des Feuchtesensors mit einer Sensorzustandskontrollvorrichtung ermöglicht es, Fehlerzustände bei der Ermittlung des Feuchtesignals zu erkennen und dem Fahrer der Erntemaschine zur Anzeige zu bringen oder Korrekturmaßnahmen einzuleiten beziehungsweise eine Kalibrierung durchzuführen. Auf die bisher erforderlichen Kalibriermaßnahmen kann weitgehend verzichtet werden, da die Sensorzustandskontrollvorrichtung einen guten Teil der Kalbrierarbeiten automatisiert erledigt. Die Zuverlässigkeit der Feuchtemeßvorrichtung wird verbessert und der Fahrer wird von immer wiederkehrenden Routinearbeiten und -kontrollen entlastet. Weitere vorteilhafte Ausgestaltungen der Erfindung ergeben sich aus den kennzeichnenden Merkmalen der Unteransprüche.

Die Erfindung wird nachfolgend anhand eines Ausführungsbeispiels näher erläutert. Es zeigt:

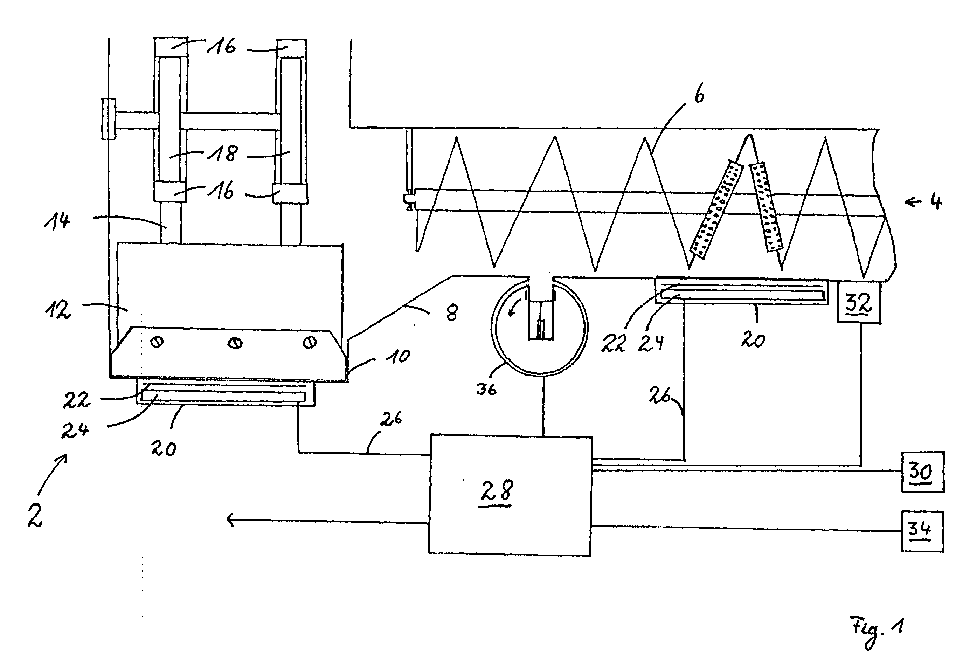

- Figur 1:: einen in einer Prinzipskizze dargestellten Kornelevatorfuß, der mit Feuchtemeßvorrichtungen ausgestattet ist.

In Figur 1 ist ein aus dem Stand der Technik bekannter Kornelevatorfuß 2 gezeigt, anhand dessen beispielhaft die Funktionsweise der Erfindung erläutert werden soll. Dem Kornelevatorfuß 2 wird von einer rotierend antreibbaren Querförderschnecke 4 mit Schnekkenwendeln 6 Erntegut zugeführt. Das Erntegut rutscht über eine Rampe 8 in das Bodensegment 10, wo es von den Elevatorpaddeln 12, die über Haltelaschen 14 an Förderketten 16 befestigt sind, die um Zahnräder 18 umlaufen, erfaßt und hochgefördert wird. Unterhalb der Querföderschnecke 4 und untenseitig am Kornelevatorfuß 2 sind jeweils in einem Gehäuse angeordnete Feuchtesensoren 20 angebracht, die die Feuchte des über die Sensorfläche hinweggeförderten Erntegutes ermitteln. Die Sensoren 20 bestehen im Ausführungsbeispiel aus einer Elektrode 22 und einer Elektronik 24, die über Leitungen 26 an die Sensorzustandskontrollvorrichtung 28 angeschlossen sind. Die von den Feuchtesensoren 20 ermittelten Feuchtewerte werden von der Elektronik 24 an die Sensorzustandskontrollvorrichtung 28 übermittelt.

Die Sensorzustandskontrollvorrichtung 28 besteht aus Mikroprozessoren sowie einer geeigneten Auswertesoftware. Sie kann direkt in die Elektronik 24 integriert sein oder sich an anderer Stelle der Erntemaschine befinden. Zu Erläuterungszwecken ist sie hier getrennt dargestellt. Die Ermittlung der Feuchtewerte durch die in Figur 1 dargestellten Feuchtesensoren 20 kann kontinuierlich oder diskontinuierlich erfolgen. Die Funktion der Sensorzustandskontrollvorrichtung besteht darin, die vom Feuchtesensor 20 ermittelten Roh-Feuchtewerte zu korrigieren, indem diese von der Sensorzustandskontrollvorrichtung mit Kalibriervorgaben verarbeitetwerden. Dazu ist es erforderlich, daß zusätzliche Sensoren ihre Sensorwerte an die Sensorzustandskontrollvorrichtung 28 übermitteln. So ist es beispielsweise möglich, anhand der Werte von anderen Sensoren die Plausibilität der gemessenen Feuchtewerte zu überprüfen. So kann die Sensorzustandskontrollvorrichtung 28 beispielsweise über Sensoren 30, die am Aufnahmeorgan wie beispielsweise einem Schneidwerk, einem Bearbeitungsorgan wie beispielsweise einem Dreschwerk, einem Motor, einer Schaltstellung eines Bedienelementes, einem Lastmesser oder einem Geschwindigkeitsmesser angebracht sein können, feststellen, ob die Erntemaschine überhaupt die Ernteorgane eingeschaltet hat und Erntegut aufnimmt. Stellt die Sensorzustandskontrollvorrichtung 28 über die Sensorwerte der Sensoren 30 fest, daß diese Meßbedingungen nicht vorliegen, so blockiert sie die Zuordnung des gemessenen Feuchtewertes zu einem Erntegut oder eine Erntegutmenge oder versieht den Feuchtewert mit einem Index, der bei der Weiterverarbeitung des Feuchtewertes verdeutlicht, daß er sich nicht auf die Messung von Erntegut bezieht. Neben der Auswertung von Sensorsignalen, die indirekt einen Rückschluß auf die Meßbedingungen an der Meßstelle zulassen, kann die Sensorzustandskontrollvorrichtung 28 auch Sensoren 32 abfragen, mit denen unmittelbar der Meßzustand gemessen werden kann, wie beispielsweise Füllstandsoder Drucksensoren oder Qualitätssensoren für das Erntegut, die im Bereich der Meßstelle oder an anderer Stelle der Erntemaschine angeordnet sind. Die Sensoren 32 können verschiedene Meßstati signalisieren, wie beispielsweise:
a) "Kein Material an Meßstelle vorhanden",
b) "Es befindet sich eine undefinierte Meßsubstanz an der Meßstelle",
c) "Es befindet sich eine definierte Meßsubstanz an der Meßstelle",
d) "Es befindet sich eine weitere definierte Meßsubstanz an der Meßstelle", oder
e) "Die Meßsubstanz an der Meßstelle kann Meßabweichungen verursachen",
f) "Bei dem Meßgut handelt es sich um Weizen".
In Abhängigkeit von diesen ermittelten Meßstati kann die Sensorzustandskontrollvorrichtung 28 unterschiedliche Korrektur-, Anzeige- oder Kalibriermaßnahmen auslösen. So ist es vorstellbar, daß die Statusmeldung a) für Diagnosemeßzwecke oder Kalibriermaßnahmen benötigt wird, die Statusmeldung b) beispielsweise bei Unter- oder Überschreitung der zulässigen Meßmenge eine Ausfilterung der gemessenen Feuchtewerte bewirkt, die Statusmeldung c) den Normalbetrieb ohne weitere Korrektur- oder Kalibriermaßnahmen bedeutet, die Statusmeldung d) einen abgewnadelten Korrekturwert auslöst, die Statusmeldung e) zu einer veränderten Genauigkeitsangabe führt, und die Statusmeldung f) die für Weizen spezifischen Kalibrierkurven aufruft. Anstelle oder zusätzlich zu einer Korrektur der Feuchtewerte können einzelne oder alle ermittelten Meßstati im Fahrerstand angezeigt werden. Die Plausibilitätsprüfung kann auch eine Logikprüfung beinhalten, wonach beispielsweise bestimmte Kombinationen von Sensorwerten zu einem Zeitpunkt oder in einem bestimmten Zeitintervall als unwahrscheinlich bewertet werden und entsprechende Korrekturen oder Aktionen der Sensorzustandskontrollvorrichtung 28 auslösen. So wäre es unwahrscheinlich, wenn der gemessene Feuchtewert in der ruhenden und im Meßbereich leeren Erntemaschine unverändert bleibt zum Feuchtewert, der für ein nachfolgend aufgenommenes Erntegut ermittelt wird. Ein gleichbleibender Feuchtewert trotz zugefördertem Emtegut läßt vermuten, daß entweder der Feuchtesensor 20 mit einer Schmutzschicht versehen ist, die eine Messung des aktuellen Erntegutes beeinträchtigt, oder eine Störung im Feuchtesensor 20 vorliegt. Die Sensorzustandskontrollvorrichtung 28 kann dann ein Signal im Fahrerstand auslösen oder eine Nachmessung oder eine Kontrollroutine zur Kontrolle des Feuchtesensors 20 initiieren. Eine andere Implausibilität könnte darin bestehen, daß dann, wenn der Feuchtesensor an einer Stelle angebracht ist, an der eine schwankende Durchsatzmenge den gemessenen Feuchtewert beeinflußt, und ein Sensor 32 schwankende Durchsatzmengen meldet, der Feuchtewert trotzdem konstant bleibt. Auch in diesem Fall muß die Sensorzustandskontrollvorrichtung 28 eine Korrektur und/oder Anzeige auslösen.

In einer weiteren Ausführung der Erfindung fragt die Sensorzustandskontrollvorrichtung 28 Eingabe- oder Speicherelemente 34 auf bestimmte Informationen ab. So kann über ein Eingabe- oder Speicherelement 34 beispielsweise eine Information über das Erntegut vorgegeben werden, wie Mais, Weizen, Gerste, etc., es können Zusatzangaben vorliegen, wie beispielsweise "trockene" oder "nasse" Sorte, "stark verunkrautet", oder eine telemetrisch übermittelte Information über die Kalibrierung oder Plausibiltät der Feuchtewerte. Der Fahrer der Erntemaschine kann so über die Eingabe des geernteten Gutes indirekt die Feuchtemeßvorrichtung auf das spezifische Erntegut kalibrieren.

In Figur 1 ist außerdem eine zusätzliche Feuchtemeßvorrichtung 36 zu sehen, die über eine Leitung mit der Sensorzustandskontrollvorrichtung 28 verbunden ist. Die zusätzliche Feuchtemeßvorrichtung 36 besteht aus einem von einem beweglichen Kolben entleerbaren Meßraum, der in einem drehbar angetriebenen Gehäuse gelagert ist. Nach Füllung des Meßraums mit Erntegut dreht sich das Gehäuse in eine Richtung, damit die Zuführöffnung zum Meßraum verschlossen wird. Während der Umdrehung kann ein zugehöriger Feuchtesensor den Feuchtewert bestimmen. Das Meßgut kann definiert verdichtet beziehungsweise verwogen werden, und das Meßgut kann im Vergleich zum Feuchtesensor 20 über eine längere Zeit gemessen werden, was der Genauigkeit zugute kommt. Der Meßraum kann mit einer zusätzlichen Mahlvorrichtung ausgestattet sein, damit nicht nur die Oberflächenfeuchte, sondern die Feuchte des gesamten Erntegutes ermittelbar ist, um möglichst genau den Meßwert bestimmen zu können. Die Feuchtemeßvorrichtung 36 kann zusätzlich über eine Beheizung, beispielsweise eine Infrarottrocknung, verfügen, um die verdunstende Wassermenge messen zu können. Der möglichst genau ermittelte Feuchtewert der zusätzlichen Feuchtemeßvorrichtung 36 kann dann von der Sensorzustandskontrollvorrichtung 28 als Kalibrierwert mit dem vom Feuchtesensor 20 ermittelten Feuchtewert verglichen und bei Abweichungen ein Korrekturfaktor bestimmt werden.

Das erfindungsgemäße Verfahren sieht vor, den Korrekturwert zumindest teilweise in Abhängigkeit vom Arbeitszustand der Erntemaschine zu bilden. Als Arbeitszustände der Erntemaschine können beispielsweise die fruchtabhängige Einstellung, der Gutdurchsatz, die Fördergeschwindigkeit, die Stellung des Förderorgans oder der Befüllungsgrad des Meßraums beziehungsweise des Förderorgans Berücksichtigung finden.

Die hier anhand von Förderelementen für einen Mähdrescher erläuterte Erfindung läßt sich von einem Fachmann ohne größeren Aufwand auf andere Erntemaschinen, wie Feldhäcksler, Ballenpressen, Mähwerke, Ladewagen und andere Erntemaschinen übertragen. Auch ist es selbstverständlich, daß die vorgeschlagene Vorrichtung sowie das Verfahren prinzipiell unter Einsatz aller bekannten Sensortechniken für die Feuchtemessung realisiert werden kann. Dabei liegt es im Können eines Durchschnittsfachmanns, für den Anwendungszweck vorteilhafte Änderungen und Ergänzungen vorzunehmen.

## Patentansprüche

1. Feuchtemesseinrichtung mit einem Feuchtesensor (20) zur Feuchtemessung des Erntegutes in einer Erntemaschine,
dass die Feuchtemesseinrichtung mit einer Sensorzustandskontrollvorrichtung (28) kombiniert ist und wobei zusätzliche Sensoren ihre Messwerte an die Sensorzustandskontrollvorrichtung (28) übermitteln und die Sensorzustandskontrollvorrichtung (28) diese Messwerte mit den vom Feuchtesensor (20) übermittelten Feuchtewerten im Verhältnis zueinander auf Plausibilität prüft.

2. Feuchtemeßeinrichtung nach Anspruch 1,
**dadurch gekennzeichnet,**
**daß** zusätzliche Sensoren ihre Meßwerte an die Sensorzustandskontrollvorrichtung (28) übermⁱtteln, diese von der Sensorzustandskontrollvorrichtung (28) mit den vom Feuchtesensor (20) übermittelten Feuchtewert im Verhältnis zueinander auf Plausibilität prüft und bei Implausibilitäten automatisch eine Korrektur der Feuchtewerte auslöst.

3. Feuchtemeßeinrichtung nach Anspruch 1 oder 2,
**dadurch gekennzeichnet,**
**daß** zusätzliche Sensoren ihre Meßwerte an die Sensorzustandskontrollvorrichtung (28) übermitteln, diese von der Sensorzustandskontrollvorrichtung (28) mit den vom Feuchtesensor (20) übermitelten Feuchtewert im Verhältnis zueinander auf Plausibilität prüft und bei Implausibilitäten automatisch eine Anzeige im Fahrerstand aktiviert.

4. Feuchtemeßeinrichtung nach einem oder mehreren der Ansprüche 1 bis 3,
**dadurch gekennzeichnet,**
**daß** die Sensorzustandskontrollvorrichtung (28) bestimmte Meßstati überprüft und in Abhängigkeit vom festgestellten Meßstatus automatisch eine Anzeige und/oder eine Aktion auslöst.

5. Feuchtemeßeinrichtung nach einem oder mehreren der Ansprüche 1 bis 4,
**dadurch gekennzeichnet,**
**daß** die Sensorzustandskontrollvorrichtung (28) in eine Elektronik (24) integriert ist.

6. Feuchtemeßeinrichtung nach einem oder mehreren der Ansprüche 1 bis 5,
**dadurch gekennzeichnet,**
**daß** die Sensorzustandskontrollvorrichtung (28) meßgutbedingte Kalibrierkurven aufgrund einer vom Bediener vorgegebenen oder über eine Sensorik erkannten Auswahl des Meßgutes auswählt.

7. Feuchtemeßeinrichtung nach einem oder mehreren der Ansprüche 1 bis 6,
**dadurch gekennzeichnet,**
**daß** die Sensorzustandskontrollvorrichtung (28) Eingabe- oder Speicherelemente (34) abfragt.

8. Feuchtemeßeinrichtung nach einem oder mehreren der Ansprüche 1 bis 7,
**dadurch gekennzeichnet,**
**daß** die Sensorzustandskontrollvorrichtung (28) die von den Feuchtesensoren (20) ermittelten Feuchtewerte über die Feuchtewerte einer zusätzlichen Feuchtemeßeinrichtung (36) kalibirert.

9. Verfahren zur Ermittlung eines Feuchtewertes von Erntegut mit einer Feuchtemessvorrichtung in einer Erntemaschine, bei der ein Feuchtesensor einen Feuchtewert ermittelt und an eine Auswertelektronik übermittelt, wo diese den Feuchtewert mit einem kalibrierabhängigen Korrekturwert verrechnet und den verrechneten Feuchtewert für Auswertungszwecke weiterverarbeitet,
**dadurch gekennzeichnet, dass**
der Korrekturwert zumindest teilweise in Abhängigkeit des Arbeitszustandes der Erntemaschine gebildet wird und wobei die Feuchtemesseinrichtung mit einer Sensorzustandskontrollvorrichtung (28) kombiniert ist und wobei zusätzliche Sensoren ihre Messwerte an die Sensorzustandskontrollvorrichtung (28) übermitteln und die Sensorzustandskontroilvorrichtung (28) diese Messwerte mit den vom Feuchtesensor (20) übermittelten Feuchtewerten im Verhältnis zueinander auf Plausibilität prüft.

10. Verfahren nach Anspruch 9,
**dadurch gekennzeichnet,**
**daß** als Arbeitszustand die fruchtabhängige Einstellung der Erntemaschine berücksichtigt wird.

11. Verfahren nach Anspruch 9 oder 10,
**dadurch gekennzeichnet,**
**daß** als Arbeitszustand der ermittelte Gutdurchsatz berücksichtigt wird.

12. Verfahren nach einem oder mehreren der Ansprüche 9 bis 11,
**dadurch gekennzeichnet,**
**daß** als Arbeitszustand die Fördergeschwindigkeit zumindest eines Förderelementes berücksichtigt wird.

13. Verfahren nach einem oder mehreren der Ansprüche 9 bis 12,
**dadurch gekennzeichnet,**
**daß** als Arbeitszustand die Stellung des Förderorgans berücksichtigt wird.

14. Verfahren nach einem oder mehreren der Ansprüche 9 bis 13,
**dadurch gekennzeichnet,**
**daß** als Arbeitszustand der Befüllungsgrad eines Meßraums oder eines Förderelementes berücksichtigt wird.

## Claims

1. A moisture measuring apparatus comprising a moisture sensor (20) for measuring moisture in the crop material in a harvester, **characterised in that** the moisture measuring apparatus is combined with a sensor state monitoring device (28) and wherein additional sensors communicate their measurement values to the sensor state monitoring device (28) and the sensor state monitoring device (28) checks said measurement values with the moisture values communicated by the moisture sensor (20) in relation to each other in respect of plausibility.

2. A moisture measuring apparatus according to claim 1 **characterised in that** additional sensors communicate their measurement values to the sensor state monitoring device (28), they are checked by the sensor state monitoring device (28) with the moisture value communicated by the moisture sensor (20) in relation to each other in respect of plausibility and in the event of implausibilities a correction of the moisture value is automatically triggered off.

3. A moisture measuring apparatus according to claim 1 or claim 2 **characterised in that** additional sensors communicate their measurement values to the sensor state monitoring device (28), they are checked by the sensor state monitoring device (28) with the moisture value communicated by the moisture sensor (20) in relation to each other in respect of plausibility and in the event of implausibilities a display is automatically activated in the driving position.

4. A moisture measuring apparatus according to one or more of claims 1 to 3 **characterised in that** the sensor state monitoring device (28) checks given measurement statuses and automatically triggers a display and/or an action in dependence on the detected measurement status.

5. A moisture measuring apparatus according to one or more of claims 1 to 4 **characterised in that** the sensor state monitoring device (28) is integrated into an electronic system (24).

6. A moisture measuring apparatus according to one or more of claims 1 to 5 **characterised in that** the sensor state monitoring device (28) selects calibration curves governed by the material being measured, on the basis of a selection of the material being measured, which is predetermined by the operator or which is recognised by way of a sensor system.

7. A moisture measuring apparatus according to one or more of claims 1 to 6 **characterised in that** the sensor state monitoring device (28) interrogates input or storage elements (34).

8. A moisture measuring apparatus according to one or more of claims 1 to 7 **characterised in that** the sensor state monitoring device (28) calibrates the moisture values ascertained by the moisture sensors (20) by way of the moisture values of an additional moisture measuring apparatus (36).

9. A method of ascertaining a moisture value of crop material with a moisture measuring apparatus in a harvester in which a moisture sensor ascertains a moisture value and communicates same to an electronic evaluation system where same adjusts the moisture value with a calibration-dependent correction value and subjects the adjusted moisture value to further processing for evaluation purposes, **characterised in that** the correction value is at least partially formed in dependence on the working condition of the harvester and wherein the moisture measuring apparatus is combined with a sensor state monitoring device (28) and wherein additional sensors communicate their measurement values to the sensor state monitoring device (28) and the sensor state monitoring device (28) checks said measurement values with the moisture values communicated by the moisture sensor (20) in relation to each other in respect of plausibility.

10. A method according to claim 9 **characterised in that** the crops-dependent setting of the harvester is taken into consideration as the working condition.

11. A method according to claim 9 or claim 10 **characterised in that** the through-put of material ascertained is taken into consideration as the working condition.

12. A method according to one or more of claims 9 to 11 **characterised in that** the conveyor speed of at least one conveyor element is taken into consideration as the working condition.

13. A method according to one or more of claims 9 to 12 **characterised in that** the position of the conveyor member is taken into consideration as the working condition.

14. A method according to one or more of claims 9 to 13 **characterised in that** the degree of filling of a measurement space or a conveyor element is taken into consideration as the working condition.

## Revendications

1. Dispositif de mesure d'humidité comprenant un senseur d'humidité (20) pour mesurer l'humidité du produit récolté dans une machine de récolte, **caractérisé en ce que** le dispositif de mesure d'humidité est combiné à un dispositif (28) de contrôle d'état de senseur, des senseurs supplémentaires transmettant leurs valeurs de mesure au dispositif (28) de contrôle d'état de senseur et le dispositif (28) de contrôle d'état de senseur examinant celles-ci sur le plan de la plausibilité par rapport aux valeurs d'humidité transmises par le senseur d'humidité (20).

2. Dispositif de mesure d'humidité selon la revendication 1, **caractérisé en ce que** des senseurs supplémentaires transmettent leurs valeurs de mesure au dispositif (28) de contrôle d'état de senseur, le dispositif (28) de contrôle d'état de senseur examine celles-ci sur le plan de la plausibilité par rapport à la valeur d'humidité transmise par le senseur d'humidité (20) et, en cas de non-plausibilités, déclenche automatiquement une correction des valeurs d'humidité.

3. Dispositif de mesure d'humidité selon la revendication 1 ou 2, **caractérisé en ce que** des senseurs supplémentaires transmettent leurs valeurs de mesure au dispositif (28) de contrôle d'état de senseur, le dispositif (28) de contrôle d'état de senseur examine celles-ci sur le plan de la plausibilité avec la valeur d'humidité transmise par le senseur d'humidité (20) et, en cas de non-plausibilités, active automatiquement un affichage dans le poste de conduite.

4. Dispositif de mesure d'humidité selon une ou plusieurs des revendications 1 à 3, **caractérisé en ce que** le dispositif (28) de contrôle d'état de senseur examine certains états de mesure et, en fonction de l'état de mesure constaté, déclenche automatiquement un affichage et/ou une action.

5. Dispositif de mesure d'humidité selon une ou plusieurs des revendications 1 à 4, **caractérisé en ce que** le dispositif (28) de contrôle d'état de senseur est intégré dans une électronique (24).

6. Dispositif de mesure d'humidité selon une ou plusieurs des revendications 1 à 5, **caractérisé en ce que** le dispositif (28) de contrôle d'état de senseur sélectionne des courbes de calibrage en fonction du produit à mesurer, sur la base d'une nature de produit à mesurer indiquée par l'utilisateur ou détectée par le système de senseurs.

7. Dispositif de mesure d'humidité selon une ou plusieurs des revendications 1 à 6, **caractérisé en ce que** le dispositif (28) de contrôle d'état de senseur interroge des moyens d'entrée ou de mémoire (34).

8. Dispositif de mesure d'humidité selon une ou plusieurs des revendications 1 à 7, **caractérisé en ce que** le dispositif (28) de contrôle d'état de senseur calibre les valeurs d'humidité déterminées par les senseurs d'humidité par rapport aux valeurs d'humidité d'un dispositif de mesure d'humidité (36) supplémentaire .

9. Procédé pour déterminer une valeur d'humidité d'un produit récolté à l'aide d'un dispositif de mesure d'humidité dans une machine de récolte, dans lequel un senseur d'humidité détermine une valeur d'humidité et la transmet à une électronique de traitement, l'électronique de traitement calcule la valeur d'humidité avec une valeur de correction dépendante du calibrage et traite la valeur d'humidité calculée à des fins d'exploitation, **caractérisé en ce que** la valeur de correction est établie au moins partiellement en fonction de l'état de travail de la machine de récolte, des senseurs supplémentaires transmettant leurs valeurs de mesure au dispositif (28) de contrôle d'état de senseur et le dispositif (28) de contrôle d'état de senseur examinant celles-ci sur le plan de la plausibilité par rapport aux valeurs d'humidité transmises par le senseur d'humidité (20).

10. Procédé selon la revendication 9, **caractérisé en ce que** l'on prend comme état de travail le réglage de la machine de récolte en fonction de la nature du produit récolté.

11. Procédé selon la revendication 9 ou 10, **caractérisé en ce que** l'on prend comme état de travail le débit mesuré de produit récolté.

12. Procédé selon une ou plusieurs des revendications 9 à 11, **caractérisé en ce que** l'on prend comme état de travail la vitesse de transport d'au moins un élément de transport.

13. Procédé selon une ou plusieurs des revendications 9 à 12, **caractérisé en ce que** l'on prend comme état de travail la position de l'élément de transport.

14. Procédé selon une ou plusieurs des revendications 9 à 13, **caractérisé en ce que** l'on prend comme état de travail le degré de remplissage d'une chambre de mesure ou d'un élément de transport.
